# EUROPÄISCHE PATENTANMELDUNG

(11) **EP 1 394 506 A1**
(43) Veröffentlichungstag der Anmeldung: **03.03.2004**
(21) Anmeldenummer: 02405721.8
(22) Anmeldetag: 26.08.2002
(51) Int. Cl.: G01C 11/02, G03B 15/00

(54) **Vorrichtung und Verfahren zur Aktualisierung eines Ausschnitts einer Gesamtdarstellung einer dreidimensionalen Struktur**

(71) Anmelder: Murer Geomatik AG, 6060 Sarnen (CH)
(72) Erfinder: Murer, Peter, 6064 Kerns (CH)
(74) Vertreter: Nückel, Thomas

(57) **Zusammenfassung**

Das erfindungsgemässe Verfahren zur Aktualisierung eines Ausschnitts einer Gesamtdarstellung einer dreidimensionalen Struktur, weist folgende Schritte auf. Ein ferngesteuerter Hubschrauber (1) wird über den Ausschnitt (6.1) der Struktur (6) gebracht. Anschliessend wird mittels einer am Hubschrauber (1) angebrachten Aufnahmeeinrichtung (2) eine Aufnahme des Ausschnitts (6.1) der Struktur (6) gemacht. In einem weitern Schritt wird die Aufnahme mittels eines rechnergestützten Verfahrens in die Gesamtdarstellung eingebunden. Damit ist eine einfache und schnelle Aktualisierung einer kartografischen Darstellung erreichbar.

## Beschreibung

### Technisches Gebiet

Die vorliegende Erfindung betrifft einen Verfahren zur Aktualisierung eines Ausschnitts einer Gesamtdarstellung einer dreidimensionalen Struktur und eine Vorrichtung zur Aktualisierung eines Ausschnitts einer Gesamtdarstellung einer dreidimensionalen Struktur. Das Verfahren und die Vorrichtung kommen insbesondere bei der Aktualisierung eines Ausschnitts einer topografischen Karte, beispielsweise einer Landkarte, eines Orthofotos oder eines Plans zum tragen.

Die Erfindung ist für verschiedenste Fachgebiete interessant. So ist es beispielsweise für die Automobilbranche von Interesse, auf Strassenkarten zurückgreifen zu können, deren Genauigkeit im Bereich von 10 bis 50 cm Auflösung liegt und deren Aktualität jederzeit gegeben ist. Eine derartige Karte kann dann als Hilfsmittel zur Steuerung von Kraftfahrzeugen und zu deren Routenplanung dienen.

Bisher wurden die Karten in einem vier bis achtjährigen Rhythmus aktualisiert. Dadurch können Veränderungen im Strassenbild, die nur temporärer Art sind und beispielsweise nur führt mehrere Monate andauern, nicht in die Karten mit einbezogen werden. Findet auf einer Autobahn beispielsweise eine Baumassnahme statt, so wurde diese, sofern keine bleibenden Veränderungen in der Verkehrsführung statt fanden, nicht in die Karte mit aufgenommen. Für die Steuerung des Verkehrsflusses und damit für die Automobilbranche ist diese Veränderung jedoch von erheblicher Bedeutung, da auch Veränderungen, die sich nur für einen kurzen Zeitraum auf die Verkehrsführung auswirken, zu erfassen sind. Damit ist eine situationsbezogene Reaktion erreichbar.

Aufgrund des mehrjährigen Aktualisierungsrhythmus sind die bisherigen Karten zur Überwachung der Bewirtschaftung landwirtschaftlicher Flächen nicht geeignet. So kann beispielsweise mit den bisherigen Karten nicht festgestellt werden, ob eine bestimmte landwirtschaftliche Nutzfläche innerhalb eines Jahres mehrfach genutzt wird oder brach liegt.

Eine Reihe von Bestandsaufnahmen müssen regelmässig innerhalb von bestimmten zeitlichen Abständen erfolgen, um eine zeitliche Veränderung aufzuzeigen, die dann als Entscheidungsgrundlage dient. In Bergregionen ist ferner der Zustand von Berghängen von besonderem Interesse, da bestimmte Parameter, wie zum Beispiel die Dichte des Bewuchses der dort wachsenden Pflanzen und Bäume, der Gesundheitszustand dieser Pflanzen, die Feuchtigkeitsdurchlässigkeit der Erdschichten usw. dem Fachmann Indizien liefern, die auf zukünftige Entwicklungen, wie zum Beispiel Hangabgänge oder Gerölllawinen hindeuten. Auch für die Planung von Eingriffen in die Natur ist eine umfassende Kenntnis der vorliegenden Gegebenheiten unerlässlich. Vor Neuanpflanzungen ist zum Beispiel die Bodenqualität und die Bodenfeuchtigkeit zu beachten, um die richtige Auswahl des Pflanzguts zu treffen.

Änderungen in der Wegführung und die Neuaufnahme von Wegen, insbesondere von Wandererwegen und Strecken für Mountainbikefahrer, welche in den Karten wegen des langwierigen Aktualisierungsprozesses noch nicht aufgenommen wurden, führen bei ungeübten oder wenig erfahrenen Kartenlesern zu Irritationen oder einer falschen Interpretation der Karte. Es ist daher auch für diesen Personenkreis von Interesse, möglichst aktuelle und präzise Karten zur Verfügung zu haben, um über das zu bewandernde oder zu befahrende Gebiet möglichst umfassend und richtig informiert zu sein.

Bei der Erstellung von Karten kommt bisher aus zeitlichen Erwägungen in erster Linie eine Kartierung aus der Luft in Betracht, da bodengebundene Kartierungsverfahren zwangsläufig nur jeweils ein sehr kleines Teilgebiet erfassen können und sehr viel Zeit in Anspruch nehmen.

Die bisherigen Methoden sind hochkomplex, kostenintensiv und in erheblichem Maße wetterabhängig, da nur bei wolkenlosem Himmel und Sonnenschein geeignete qualitativ ausreichende Fotos gemacht werden können. Zudem ist die Verfügbarkeit von geeigneten Flugzeugen, die bereits die entsprechende Ausstattung an Bord haben, problematisch, weil der Bedarf für derartige Flugzeuge an Tagen, die für Luftaufnahmen geeignet sind, relativ hoch ist und derartige Flugzeuge nur in begrenztem Umfang zur Verfügung stehen.

Eine Möglichkeit, die Aufnahme der Erdoberfläche dem Benutzer grafisch zur Verfügung zu stellen, ist in Form eines Orthofotos gegeben.

Das Orthofoto ist im Gegensatz zum Luft- oder Satellitenbild ein verzerrungsfreies Abbild der Erdoberfläche in Orthogonalprojektion und kartenrichtiger Darstellung. Ein Orthofoto wird aus einem digitalen oder digitalisierten Bild aus der Luft, das von einem Flugzeug oder einem Satelliten aus mittels einer Kamera aufgenommen wurde, hergestellt. Die Verzerrungen und Verschiebungen, welche bei der Aufnahme des Bilds durch die Zentralprojektion und die unterschiedlichen Entfernungen der aufgenommenen Objekte zur Kamera entstehen, werden rechnerisch ausgeglichen. Die Verbesserungen im Massstab bei verschieden entfernten Einzelobjekten werden mit Hilfe eines digitalen Geländemodells berechnet. So kann jedem Bildpunkt sein neuer Platz im Orthofoto zugewiesen werden und das neue Bild erhält einen einheitlichen Massstab.

Das Orthofoto kann wegen der durch die Umbildung erreichten geometrischen Genauigkeit als Karte verwendet werden. Zudem können die Daten des Orthofotos in ein Geo-Informationssystem (GIS) einfliessen.

Als Grundlage für die Berechnung der Bildpunkte des Orthofotos dienen Geländedaten, welche beispielsweise von einer Geländehöhen-Datenbank, im Folgenden auch als digitales Geländemodell bezeichnet, bereitgestellt werden. Die erforderlichen Parameter für die Orientierung des Orthofotos werden über aus der Luft sichtbare Passpunkte berechnet.

Dient ein analoges Luftbild als Ausgangsmaterial zur Herstellung eines Orthofotos, wird dieses mit Hilfe eines Fotoscanners mit einer Tiefe von beispielsweise 8 Bit je Farbe und einer Auflösung von 15 µm bzw. 30 µm digitalisiert. Für ein schwarz-weiss Bild ergibt sich damit eine Farbauflösung von 8 Bit und für ein Farbbild von 24 Bit. Anhand der Passpunkte zur räumlichen Orientierung und eines Höhenrasters erfolgt die Berechnung der Bildpunkte des Orthofotos.

Die Genauigkeit des Orthofotos hängt vom Ausgangsmassstab, also dem Massstab des Luftbilds, und der Dichte der Daten aus dem digitalen Geländemodell ab.

Das Orthofoto kann abhängig vom Bildmassstab und der vorgesehenen Anwendung beispielsweise mit einer Auflösung von 0,5 m (Massstab 1 : 30.000 oder 1 : 15.000), einer Auflösung von 0,25 m (Massstab: 1 : 15.000 oder 1 : 10.000) oder einer Auflösung 0,125 m (Massstab: < 1 : 10.000) berechnet werden. Der Begriff Karte wird dabei in der Regel für Massstäbe von 1 : 10.000 oder höher, der Begriff Orthofoto für Massstäbe zwischen 1 : 2.500 und 1 : 10.000 und der Begriff Plan für Massstäbe niedriger als 1 : 5.000 verwendet.

### Stand der Technik

Aus der deutschen Offenlegungsschrift DE 44 19 359 A1 ist ein Verfahren zur Erfassung, Auswertung, Ausmessung und Speicherung von Geo-Informationen bekannt. Dort soll ein praxisorientiertes Datenhandling und eine vereinfachte Verfügbarkeit in den Nutzerzentren geschaffen werden, wobei weiterhin die Möglichkeit gegeben ist, bestehende Komponenten in digitalen Stereo-Arbeitsstationen mit interaktiver Überlagerung, Einpassung und Fortführung digital erfasster Landschafts- oder Katasterdaten zu ergänzen. Demnach soll eine topografische Fläche durch Luftbildaufnahmen mittels Flugzeug aufgenommen werden, wobei die Lage des Flugzeugs im Raum durch ein differential global positioning system (DGPS) bestimmbar ist. Ein daraus erhaltenes digitales Höhenmodell wird mit der überflogenen topografischen Fläche unter Berücksichtigung von Projektionszentren zu einem Orthofoto verbunden, das dem potentiellen Nutzer mittels Datenträger zur Verfügung gestellt wird. Auf diese Weise sollen nutzerspezifisch bereits vorhandene Daten einer weiteren Anwendung auch ohne erneute Befliegung zuführbar sein.

Nachteil des in der Druckschrift DE 44 19 359 A1 vorgestellten Verfahrens ist jedoch die grosse vorzuhaltende Datenmenge und deren komplexe Bearbeitungen und zwar auch dann, wenn eine spezielle Aufgabe des Nutzers auch mit einer wesentlich kleineren Datenmenge und dann mit geringerem Aufwand lösbar wäre. Ein weiterer Nachteil besteht darin, dass neben einem speziell ausgerüsteten und nur für diesen Zweck einsetzbaren Flugzeug zusätzlich noch Satelliten für die Positionserfassung und Navigation des Flugzeugs erforderlich sind. Der Rechenaufwand für die exakte Positionsbestimmung des Flugzeugs und damit der Kamera ist erheblich. Dieses Verfahren benötigt somit ein hochkomplexes System, dessen Anschaffung und Betrieb mit erheblichen Kosten verbunden ist und nur von besonders ausgebildetem Personal betrieben werden kann.

### Darstellung der Erfindung

Eine Aufgabe der Erfindung ist es, ein Verfahren zur Aktualisierung eines Ausschnitts einer Gesamtdarstellung einer dreidimensionalen Struktur und eine Vorrichtung zur Aktualisierung eines Ausschnitts einer Gesamtdarstellung einer dreidimensionalen Struktur anzugeben, die eine vergleichsweise einfache und schnelle Aktualisierung der Gesamtdarstellung ermöglichen.

Vorteilhafter Weise bilden das Verfahren und die Vorrichtung zudem eine kostengünstige Alternative zu bestehenden Lösungen. Zudem halten sich die Anforderungen an das Betriebspersonal in vertretbaren Rahmen.

Die Aufgabe wird durch ein Verfahren zur Aktualisierung eines Ausschnitts einer Gesamtdarstellung einer dreidimensionalen Struktur mit den Merkmalen gemäss Patentanspruch 1 und eine Vorrichtung zur Aktualisierung eines Ausschnitts einer Gesamtdarstellung einer dreidimensionalen Struktur mit den Merkmalen gemäss Patentanspruch 9 gelöst.

Das erfindungsgemässe Verfahren zur Aktualisierung eines Ausschnitts einer Gesamtdarstellung einer dreidimensionalen Struktur weist folgende Schritte auf. Ein ferngesteuerter Hubschrauber wird über den Ausschnitt der Struktur gebracht. Anschliessend wird mittels einer am Hubschrauber angebrachten Aufnahmeeinrichtung eine Aufnahme des Ausschnitts der Struktur gemacht. In einem weiteren Schritt wird die Aufnahme mittels eines rechnergestützten Verfahrens in die Gesamtdarstellung eingebunden.

Die erfindungsgemässe Vorrichtung zur Aktualisierung eines Ausschnitts einer Gesamtdarstellung einer dreidimensionalen Struktur weist ein fernsteuerbares Fluggerät auf, welches eine Aufnahmeeinrichtung zur Aufnahme des Ausschnitts der dreidimensionalen Struktur mit sich führt. Zudem ist eine Fernsteuerung zur Steuerung des Fluggeräts vorgesehen, wobei das Fluggerät über eine drahtlose Verbindung mit der Fernsteuerung verbindbar ist. Des weiteren ist eine Recheneinheit zum Einbinden der von der Aufnahmeeinrichtung stammenden Aufnahme in die Gesamtdarstellung vorhanden.

Vorteilhafte Weiterbildungen der Erfindung ergeben sich aus den in den abhängigen Patentansprüchen angegebenen Merkmalen.

So ist es von Vorteil, wenn die Aufnahmeeinrichtung senkrecht über den Ausschnitt gebracht wird, weil dadurch optische Verzerrungen der Aufnahme minimiert werden können. Damit reduziert sich auch erheblich der Rechenaufwand für die Erstellung der Karte, des Orthofotos und/oder des Plans.

Mittels eines optischen Lots und/oder einer am Hubschrauber vorgesehenen Prüfeinrichtung kann überprüft werden, ob sich die Aufnahmeeinrichtung senkrecht über dem Ausschnitt befindet. Dies erleichtert dem Bedienpersonal die Navigation und die Lagebestimmung des Hubschraubers.

In einer Ausführungsform der Erfindung kann die Struktur mit Referenzmarken versehen werden, um die Orientierung des aufgenommenen Ausschnitts später einfacher zu bestimmen.

In einer weiteren Ausführungsform der Erfindung kann die Aufnahme mittels einer digitalen Kamera gemacht werden. Dadurch stehen die Aufnahmen umgehend zur Verfügung und können noch vor Ort einer ersten Qualitätsprüfung unterzogen werden. Werden die Bilddaten der Kamera per Luftschnittstelle, zum Beispiel per Funk oder Infrarot zur Recheneinheit übertragen, stehen die Bilddaten damit auch in Echtzeit zur Verfügung.

Wenn mittels einer Videokamera Videoaufnahmen gemacht werden, welche im Wesentlichen das zeigen, was mit der Aufnahmeeinrichtung aufnehmbar ist, erleichtert dies dem Bedienpersonal sowohl die Navigation als auch die Positionsbestimmung und gibt frühzeitig Aufschluss über den Bereich, den die Aufnahmeeinheit aufnehmen kann. Die Videokamera fungiert somit auch als Sucher.

Vorteilhafter Weise wird die Aufnahme mittels Funk ausgelöst.

An Stelle des fernsteuerbaren Hubschraubers kann auch ein steuerbarer Ballon, ein fernsteuerbares Flugzeug oder ein Kran verwendet werden.

Eine Weiterbildung der erfindungsgemässen Vorrichtung sieht vor, dass das fernsteuerbare Fluggerät ein fernsteuerbarer Hubschrauber, ein fernsteuerbares Flugzeug oder ein fernsteuerbarer Ballon ist.

In manchen Fällen kann es auch genügen, die Aufnahme mittels eines Krans, beispielsweise eines mobilen Krans, an dessen Seil die Aufnahmeeinrichtung befestigt ist, zu machen.

Die erfindungsgemässe Vorrichtung kann auch einen oder mehrere Ausleger am Hubschrauber aufweisen. Damit wird während des Fluges die Erkennbarkeit der Lage des Hubschraubers erhöht.

Bei einer Ausführungsform der Erfindung ist die Aufnahmeeinrichtung schwenkbar auf einer Halterung montiert, so dass ein zusätzlicher Freiheitsgrad vorhanden ist. Dies erleichtert die Aufnahme.

Vorteilhafter Weise weist die Halterung ein Mittel zur Schwingungsdämpfung auf. Damit werden unerwünschte Schwingungen oder Vibrationen von der Aufnahmeeinrichtung ferngehalten.

Die Aufnahmeeinrichtung und die Videokamera können derart angeordnet sein, dass beide im wesentlichen die selbe Aufnahmerichtung aufweisen. Dadurch kann die Videokamera als Sucher für die Aufnahmeeinrichtung dienen.

Falls die Aufnahmeeinrichtung eine digitale Kamera aufweist, sind die Aufnahmen umgehend verfügbar und ist eine erste Qualitätskontrolle noch vor Ort möglich. Ist eine Funkübertragung der von der digitalen Kamera gemachten Aufnahmen vorhanden, so können die Aufnahmen sogar noch während des Fluges überprüft werden.

Die Videokamera kann mit einer Sendeeinheit verbunden sein, um die von der Videokamera aufgenommenen Bilder drahtlos zu übermitteln.

Damit die Bedienung des Fluggeräts einfacher wird, kann eine Regeleinheit zur automatischen Einhaltung einer vorgegebenen Position vorgesehen sein.

### Kurze Beschreibung der Zeichnungen

Im Folgenden wird die Erfindung anhand von zwei Figuren weiter erläutert.
- Figur 1: zeigt eine vereinfacht dargestellte Frontalansicht eines Helikopters mit einer Aufnahmeeinrichtung über einem aufzunehmenden Untergrund.
- Figur 2: zeigt eine erfindungsgemässe Ausführungsform gargestellt in Form eines Blockdiagramms.
- Figur 3: zeigt in einer Seitenansicht eine mögliche Ausführungsform eines ferngesteuerten Hubschraubers, wie in der Erfindung zum Einsatz kommen kann.
- Figur 4: zeigt in einer Seitenansicht eine Kamerahalterung, wobei die optische Achse Kamera senkrecht nach unten ausgerichtet ist.

### Wege zur Ausführung der Erfindung

Die Begriffe Helikopter und Hubschrauber werden im Folgenden als gleichbedeutend verwendet.

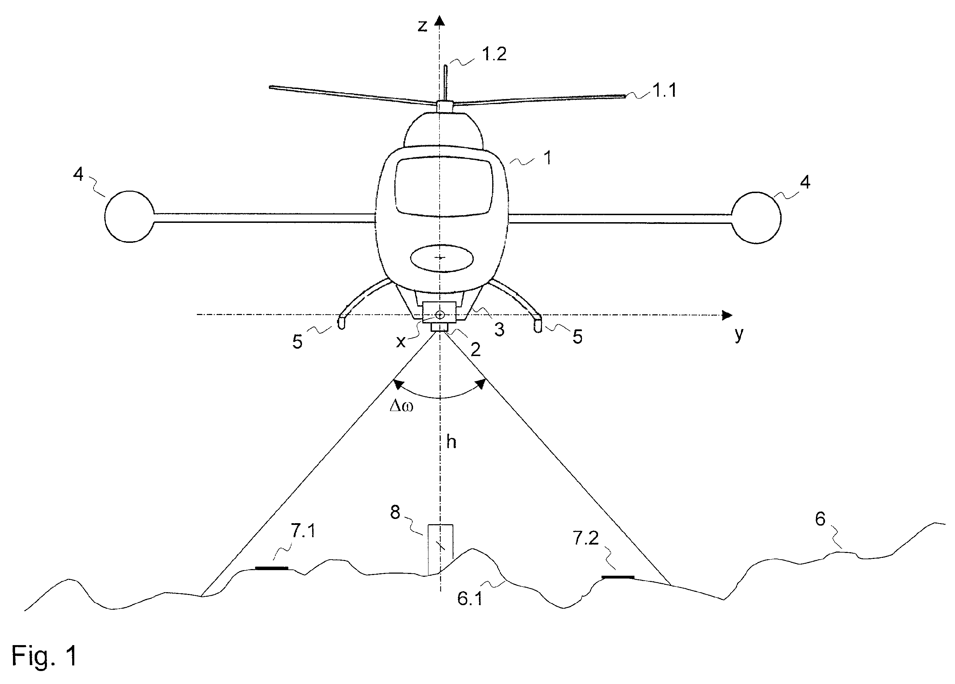

In Figur 1 ist beispielhaft für die Erfindung ein Hubschrauber 1 gezeigt, der in einer Flughöhe h über einem Untergrund 6, im Folgenden auch als dreidimensionale Struktur oder topografische Fläche bezeichnet, fliegt. Auf der Unterseite des so Hubschraubers 1 ist eine Halterung 3 vorgesehen, die eine schwenkbare Aufnahmeeinheit 2 hält, angeordnet. Die Halterung 3 und die Aufnahmeeinheit 2 sind dabei zwischen dem linken und rechten Teil des Landegestells 5 angeordnet. Die Aufnahmeeinheit 2 ist in Figur 1 dabei derart ausgerichtet, dass ihre optische Achse senkrecht nach unten weist und damit mit der z-Achse zusammenfällt.

Im Bedarfsfall kann die Aufnahmeeinheit 2 auch um die y-Achse geschwenkt werden. Hierfür ist ein spezieller zwischen die Halterung 3 und die Aufnahmeeinheit 2 geschaltete Servomotor vorgesehen. Dieser kann mit der Fernsteuerung angesteuert werden und bewirkt das Schwenken der Aufnahmeeinheit 2 um die y-Achse. Mit der in Figur 1 nicht gezeigten Fernsteuerung wird daneben auch der Hubschrauber 1 sowie der Auslösemechanismus der Aufnahmeeinheit 2 gesteuert.

Der Hubschrauber 1 ist mit einer Sende-/Empfangseinheit ausgestattet und damit drahtlos mit der Fernbedienung verbunden. Die drahtlose Verbindung kann durch eine Funkverbindung oder auch eine optische Verbindung erreicht werden.

Durch den Antriebsmotor des Hubschraubers 1 werden Schwingungen erzeugt, die im Bereich von 150 bis 250 Hz liegen. Durch den Heckrotor 1.2 des Hubschraubers 1 werden ebenfalls Schwingungen im Bereich von 100 bis 150 Hz erzeugt. Schliesslich erzeugt auch der Hauptrotor 1.1 des Hubschraubers 1 Störungen, welche im Bereich von 20 bis 30 Hz liegen. Damit diese Schwingungen keine Störungen beim Aufnehmen durch die Aufnahmeeinrichtung 2 erzeugen, ist die Halterung 3 mit einem schwingungsdämpfenden Element versehen, sodass die Aufnahmeeinheit 2 schwingungsfrei gelagert ist.

Die oben angegebenen Frequenzen der Schwingungen hängen von den technischen Eigenschaften des Hubschraubers 1 ab. Einsetzbar ist ein Hubschrauber, dessen Eigengewicht bei ca. 7,5 kg, die mögliche Zuladung bei 3 bis 5 kg, die Flugdauer bei ca. 30 min und der Rotor-Durchmesser bei ca. 1,8 m liegt. Vorteilhafter Weise wird ein Benzinmotor eingesetzt, da dieser gegenüber einem Elektromotor eine grössere Einsatzdauer mit sich bringt. Das Gewicht derer Akkumulatoren für einen Elektromotor wirkt sich negativ auf das Gesamtgewicht des Hubschraubers 1 aus.

Die in Figur 1 gezeigte Kabinenverkleidung des Hubschraubers 1 ist nicht zwingend erforderlich.

Je nach Anwendungsfall können zusätzliche Ausleger 4, die farblich derart gestaltet sind, dass der Hubschrauber 1 deutlicher erkennbar ist, am Hubschrauber 1 angebracht sein. Insbesondere bei größeren Entfernungen können diese für die Navigation hilfreich sein.

Falls das Gelände oder die dreidimensionale Struktur 6 keine oder nur relativ schwache Referenzmarken Passpunkte aufweist, können zusätzliche Referenzmarken 7.1 und 7.2 im Gelände 6, vorzugsweise im Ausschnitt 6.1 ausgebracht werden. Diese können zu einem späteren Zeitpunkt, nämlich bei der Bestimmung der Orientierung des Ausschnitt 6.1, zu Hilfe genommen werden.

Um zu erreichen, dass sich der Hubschrauber 1 und damit die Aufnahmeeinheit 2 vertikal über dem aufzunehmenden Objekt befindet, kann hilfsweise ein optisches Lot 8 benutzt werden. Sobald über den Spiegel des optischen Lots 8 der Hubschrauber 1 zu sehen ist, befindet sich die Aufnahmeeinheit 2 über dem aufzunehmenden Objekt und der Auslösemechanismus der Aufnahmeeinheit 2 kann betätigt werden.

Durch die Flughöhe h sowie die Optik der Aufnahmeeinheit 2 wird der Aufnahme Winkel und damit der Ausschnitt 6.1 bestimmt.

Die folgende Tabelle gibt Aufschluss über die Projektionsfläche abhängig von der Flughöhe h und der verwendeten Brennweite des Objektivs der Aufnahmeeinheit 2.

| Projektionsfläche in Meter * Meter | | | | |
|---|---|---|---|---|
| Flughöhe h in Me- | Brennweite 40 mm | Brennweite 50 mm | Brennweite 60 mm | Brennweite 80 mm |
| 10 | 15*15 | 12*12 | 10*10 | 8*8 |
| 20 | 30*30 | 24*24 | 20*20 | 15*15 |
| 30 | 45*45 | 36*36 | 30*30 | 23*23 |
| 40 | 60*60 | 48*48 | 40*40 | 30*30 |
| 50 | 75*75 | 60*60 | 50*50 | 38*38 |
| 60 | 90*90 | 72*72 | 60*60 | 45*45 |
| 70 | 105*105 | 84*84 | 70*70 | 53*53 |
| 100 | 150*150 | 120*120 | 100*100 | 75*75 |
| 200 | 300*300 | 240*240 | 200*200 | 150*150 |
| 300 | 450*450 | 360*360 | 300*300 | 225*225 |

Bei einem Objektiv mit einer Brennweite von beispielsweise 60 mm und einer Flughöhe h von 40 m ergibt sich eine Projektionsfläche von 40 mal 40 m. Bei einer Brennweite von 80 mm und einer Flughöhe h von 50 m ergibt sich eine Projektionsfläche von 38 mal 38 m.

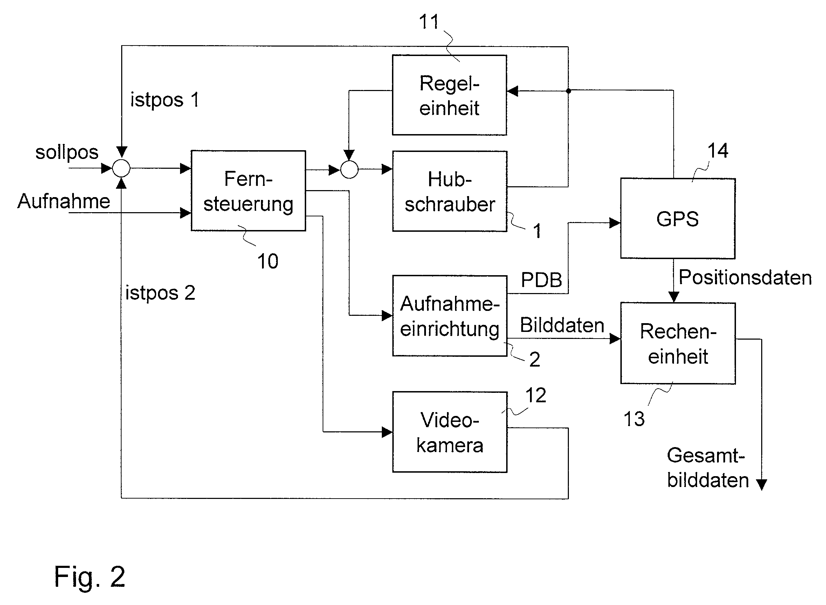

In Figur 2 ist ein Blockdiagramm einer Ausführungsform der erfindungsgemässen Vorrichtung gezeigt. Durch einen Vergleich zwischen Sollposition sollpos und Istposition istpos1 ergibt sich eine Stellgrösse, welche mittels der Fernsteuerung 10 an den Hubschrauber 1 übermittelt wird. Sofern der Hubschrauber 1 mit einer Regeleinheit 11 ausgestattet ist, kann der Hubschrauber auf Befehl die vorgegebene Position automatisch selbständig halten, ohne dass über die Fernsteuerung 10 auf die Position des Hubschraubers 1 Einfluss genommen werden muss. Verfügt der Hubschrauber 1 über eine Videokamera 12, so kann mittels den von der Videokamera 12 ermittelten Bildern eine zusätzliche Positionsbestimmung zu vorgenommen werden. Die Videokamera liefert dazu eine zweite Istposition istpos2. Diese Information kann zur genaueren Bestimmung derer Lage des Hubschraubers 1 herangezogen werden.

Durch Auslösen des Aufnahmebefehls Aufnahme an der Fernsteuerung 10 wird ein Funkbefehl an die Aufnahmeeinrichtung 2 übermittelt, so dass diese den gewünschten Ausschnitt 6.1 aufnimmt. Die entsprechenden Bilddaten werden einer Recheneinheit 13 zugeführt, die daraus zusammen mit den übrigen Daten des Gesamtbilds die Gesamtbilddaten errechnet. Die Gesamtbilddaten können nun auf einem Bildschirm, welcher in Figur 2 nicht gezeigt ist, dargestellt und/oder auf einen Drucker oder einem Plotter ausgegeben werden.

Führt der Hubschrauber 1 zusätzlich ein global positioning system (GPS) 14 mit sich, so kann, sobald eine Aufnahme mit der Aufnahmeeinrichtung 2 gemacht wird, über einen sogenannten Positionsdatenbefehl PDB das global positioning system 14 die Position in Form von Positionsdaten an die Recheneinheit 13 übermitteln. Die Übermittlung der Positionsdaten kann über die Luftschnittstelle, zum Beispiel mittels Funk oder Infrarot, erfolgen. Die Datenübertragung mittels Funk kann auf dem Universal Mobile Telecommunications/Telephony System (UMTS), dem Digital European Cordless Telephone (DECT) oder auf dem Groupe Special Mobile (GSM) Standart basieren. Auf diese Weise stehen der Recheneinheit 13 neben den Bilddaten auch gleichzeitig die zu den Bilddaten korrespondieren Positionsdaten zur Verfügung. In der Regel genügt für die Genauigkeit der Position die vom global positioning system 14 gelieferte Toleranz von 3-5 m.

Zusätzlich können die vom global positioning system 14 ermittelten Positionsdaten der Regeleinheit 11 und/oder über eine am Boden befindliche Anzeige, welche in Figur 2 nicht gezeigt ist, dem Bedienpersonal zur Verfügung gestellt werden.

Gegebenenfalls ist zu berücksichtigen, dass im Schwebeflug die Rotationsachse des Hauptrotors 1.1 des Hubschraubers 1 leicht aus derer vertikalen Achse, der z-Achse, abweichen kann. Dies ist durch das Zusammenspiel des Hauptrotors 1.1 und des Heckrotors 1.2 und der damit verbundenen Kräfte und Drehmomente bedingt. Möglicherweise müssen die Aufnahmeeinheit 2 und die Videokamera 12 entsprechend justiert werden.

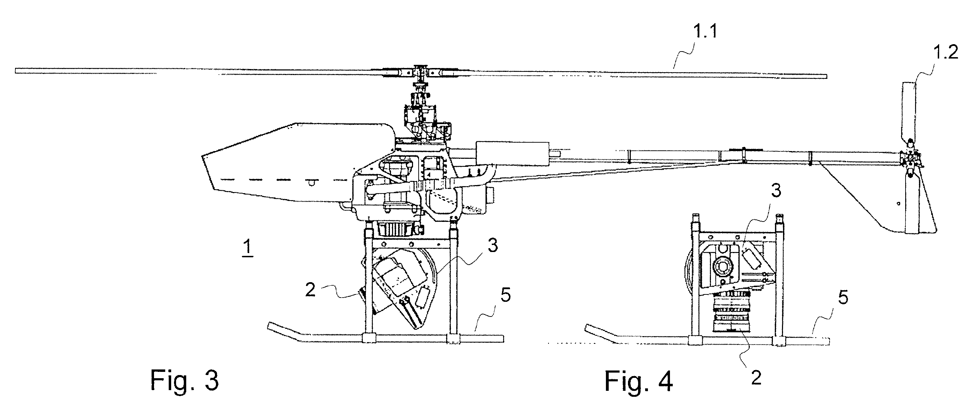

In Figur 3 ist in einer Seitenansicht eine mögliche Ausführungsform eines ferngesteuerten Hubschraubers, wie in der Erfindung zum Einsatz kommen kann, gezeigt. Zur Gewichtsersparnis beschränkt sich die Ausstattung des Hubschraubers auf die für die Funktion wesentlichen Komponenten. Die optische Achse der Kamera 2 ist hier in Flugrichtung schräg nach vorne unten ausgerichtet.

Zur weiteren Veranschaulichung ist in Figur 4 in einer Seitenansicht die Kamerahalterung 3, im Detail dargestellt, wobei die optische Achse Kamera 2 senkrecht nach unten ausgerichtet ist. Wie aus den Figuren 2 und 3 entnehmbar ist, ist die Kamera 2 mittels der Halterung 3 schwenkbar gelagert. Die Halterung 3 ist zwischen den beiden Kufen des Landegestells 5 angeordnet und mit diesem verbunden.

Die Erfindung hat den Vorteil, dass die Aufnahme des Ausschnitts 6.1 nurmehr in geringerem Maße vom Wetter abhängt. Da die Flughöhe des Hubschraubers 1 in der Regel unterhalb der Wolkendecke liegt, können somit auch Aufnahmen des Ausschnitts 6.1 bei weniger klarem Himmel gemacht werden. Die Erfindung hat weiterhin den Vorteil, dass annähernd jederzeit eine Aufnahme des Ausschnitts 6.1 gemacht werden kann. Die Person, welche die Aufnahme des Ausschnitts 6.1 macht, begibt sich zum Aufnahmeort, bringt den Hubschrauber 1 in die Aufnahmeposition, macht die gewünschten Aufnahmen, holt den Hubschrauber 1 wieder zurück und kann umgehend die Daten zu Aktualisierung der Gesamtdarstellung verwenden.

Die Einbindung der Aufnahme des Ausschnitts 6.1 in die zu aktualisierende Gesamtdarstellung erfolgt rechnergestützt mittels eines bildverarbeitenden Verfahrens. Dabei werden für die Erstellung eines farbigen Orthofotos die Farben des in die Gesamtdarstellung einzubindenden Ausschnittes 6.1 an die Farben der Gesamtdarstellung angeglichen.

### Bezugszeichenliste

- 1: Hubschrauber
- 1.1: Hauptrotor
- 1.2: Heckrotor
- 2: Aufnahmeeinrichtung
- 3: Halterung
- 4: Ausleger
- 5: Landegestell
- 6: dreidimensionale Struktur
- 6.1: Ausschnitt
- 7.1: erste Referenzmarke
- 7.2: zweite Referenzmarke
- 8: optisches Lot
- Δω: Aufnahmewinkel
- h: Flughöhe
- x: x-Achse
- y: y-Achse
- z: z-Achse
- istpos1: Istposition 1
- istpos2: Istposition 2
- sollpos: Sollposition
- 10: Fernsteuerung
- 11: Regeleinheit
- 12: Videokamera
- 13: Recheneinheit

## Patentansprüche

1. Verfahren zur Aktualisierung eines Ausschnitts einer Gesamtdarstellung einer dreidimensionalen Struktur, bei dem ein ferngesteuerter Hubschrauber (1) über den Ausschnitt (6.1) der Struktur (6) gebracht wird,
bei dem mittels einer am Hubschrauber (1) angebrachten Aufnahmeeinrichtung (2) eine Aufnahme des Ausschnitts (6.1) der Struktur (6) gemacht wird,
bei dem die Aufnahme mittels eines rechnergestützten Verfahrens in die Gesamtdarstellung eingebunden wird.

2. Verfahren nach Patentanspruch 1,
bei dem die Aufnahmeeinrichtung (2) senkrecht über dem Ausschnitt (6.1) gebracht wird.

3. Verfahren nach Patentanspruch 2,
bei dem mittels eines optischen Lots (8) und/oder einer am Hubschrauber (1) vorgesehenen Prüfeinrichtung überprüft wird, ob sich die Aufnahmeeinrichtung (2) senkrecht über dem Ausschnitt (6.1) befindet.

4. Verfahren nach einem der Patentansprüche 1 bis 3,
bei dem die Struktur (6) mit Referenzmarken (7.1, 7.2) versehen wird.

5. Verfahren nach einem der Patentansprüche 1 bis 4,
bei dem die Aufnahme mittels einer digitalen Kamera gemacht wird.

6. Verfahren nach einem der Patentansprüche 1 bis 5,
bei dem mittels einer Videokamera Videoaufnahmen gemacht werden, welche im wesentlichen das zeigen, was mit der Aufnahmeeinrichtung (2) aufnehmbar ist.

7. Verfahren nach Patentanspruch 1 oder 6,
bei dem die Aufnahme mittels Funk ausgelöst wird.

8. Verfahren nach einem der Patentansprüche 1 bis 7,
bei dem an Stelle des fernsteuerbaren Hubschraubers (1) ein steuerbarer Ballon, ein fernsteuerbares Flugzeug oder ein Kran verwendet wird.

9. Vorrichtung zur Aktualisierung eines Ausschnitts einer Gesamtdarstellung einer dreidimensionalen Struktur, mit einem fernsteuerbaren Fluggerät, welches eine Aufnahmeeinrichtung (2) zur Aufnahme des Ausschnitts (6.1) der dreidimensionalen Struktur (6) aufweist,
mit einer Fernsteuerung zur Steuerung des Fluggeräts, wobei das Fluggerät über eine Funkverbindung mit der Fernsteuerung verbindbar ist,
mit einer Recheneinheit zum Einbinden der von der Aufnahmeeinrichtung (2) stammenden Aufnahme in die Gesamtdarstellung.

10. Vorrichtung nach Patentanspruch 9,
bei der das fernsteuerbare Fluggerät ein fernsteuerbarer Hubschrauber (1), ein fernsteuerbares Flugzeug oder ein fernsteuerbarer Ballon ist.

11. Vorrichtung nach Patentanspruch 10,
bei der der Hubschrauber (1) einen oder mehrere Ausleger (4) aufweist.

12. Vorrichtung nach einem der Patentansprüche 9 bis 11,
bei der die Aufnahmeeinrichtung (2) schwenkbar auf einer Halterung (3) montiert ist.

13. Vorrichtung nach Patentanspruch 12,
bei der die Halterung (3) ein Mittel zur Schwingungsdämpfung aufweist.

14. Vorrichtung nach einem der Patentansprüche 9 bis 13,
bei der die Aufnahmeeinrichtung (2) und die Videokamera derart angeordnet sind, dass beide im wesentlichen die selbe Aufnahmerichtung aufweisen.

15. Vorrichtung nach einem der Patentansprüche 9 bis 14,
bei der die Aufnahmeeinrichtung (2) eine digitale Kamera aufweist.

16. Vorrichtung nach einem der Patentansprüche 9 bis 15,
bei der die Videokamera mit einer Sendeeinheit verbunden ist, um die von der Videokamera aufgenommenen Bilder drahtlos zu übermitteln.

17. Vorrichtung nach einem der Patentansprüche 9 bis 16,
bei der das Fluggerät eine Regeleinheit zur automatischen Einhaltung einer vorgegebenen Position aufweist.
